# EUROPEAN PATENT APPLICATION

(11) **EP 2 172 377 A1**
(43) Date of publication of application: **07.04.2010**
(21) Application number: 09172323.9
(22) Date of filing: 06.10.2009
(51) Int. Cl.: B60T 8/172, G01S 5/00, G01S 5/14, G08G 1/01, G08G 1/0967

(54) **Assymetrical structures; method for processing collected data to extract road status information**

(30) Priority: 06.10.2008 SE 0802098
(71) Applicant: Semcon Caran AB, 417 80 Göteborg (SE)
(72) Inventor: Ekström, Pär, 414 82 Göteborg (SE); Bogren, Jörgen, 436 42 Askim (SE); Gustavsson, Torbjörn, 416 56 Göteborg (SE)
(74) Representative: Bergquist, Kjell Gunnar

(57) **Abstract**

The present invention relates to a method for processing collected data from at least one mobile unit (7, 8, 9) and/or stationary unit (2, 3, 4) in an area having at least one road (11, 16, 21, 29) extending therein. The purpose of the collected data is to extract road status information for the aforementioned road (11, 16, 21, 29). The method involves the steps: subdivision of the area into a number of sub-areas (10, 13, 15, 18, 24, 28) and assignment of obtained unique road status information to each sub-area (10, 13, 15, 18, 24, 28). The method also includes the step: configuration of each sub-area (10, 13, 15, 18, 24, 28) so that at least one distinctive geographical feature or characteristic which affects the climate within the sub-area (10, 13, 15, 18, 24, 28) is for the most part present within the sub-area (10, 13, 15, 18, 24, 28).

## Description

### TECHNICAL FIELD

The present invention relates to a method for processing collected data from at least one mobile unit and/or stationary unit in an area having at least one road extending therein. The purpose of the collected data is to extract road status information for the aforementioned road. The method involves the following steps: subdivision of the area into a number of sub-areas and assignment of obtained unique road status information to each sub-area.

### BACKGROUND ART

Today's road network plays an important role in providing an infrastructure for the transport of persons and goods. In order to maintain the function of this infrastructure, it is of great importance to keep the road network passable, in particular to prevent accidents, at times of slipperiness or when the roads are in a poor state. An extensive structure for carrying out road maintenance is normally required for this purpose. Road maintenance usually takes the form of ploughing, sanding or salting or a combination of two or three of these.

The road surface can become slippery or covered with snow rapidly and locally as a result of changing weather conditions, which makes it difficult to keep up countrywide road maintenance. Road maintenance often takes place along certain routes and sections according to predetermined schedules when certain weather conditions prevail, or after a specific level of precipitation has occurred. It is desirable to be able to establish as rapidly as possible when and where road maintenance work will be required, in conjunction with which warning messages can also be broadcast to road users. In the case of aquaplaning, for example, the only appropriate action is to issue warning messages, since no effective road maintenance is available to deal with this circumstance.

The collection of measurement data from both fixed and mobile measurement units is previously disclosed, in conjunction with which the mobile measurement units in many cases can be installed on or in at least a proportion of the vehicles that are present on the roads. With the help of modern communications technology and GPS, it is possible in this case to collect positional data relating directly to the weather such as the temperature and humidity, but also indirect data such as operating windscreen wipers, activated ABS systems, etc.

Described in document SE525530 is a system for the measurement and collection of road status information to improve the effectiveness of road maintenance. The system is arranged to permit the dynamic collection and preparation of road status information based on measured values from vehicles that are being driven on the roads in question, including in combination with permanent weather stations. The vehicles in the system can also exchange information with one another.

Road status information collected exclusively from permanent weather stations or more dynamically according to SE525530 is normally prepared in such a way that unique weather data can be assigned by square to a geographically symmetrical grid matrix, in which case unique road status information can be assigned to sections of road within the associated square. One square thus contains a sub-area, the size of which is normally in the order of 6x6 kilometres.

A problem is associated with this procedure, however, since the road network within a given square can experience different weather situations, for example slippery conditions locally at one particular location within a given square, which have not been reported in the combined road status information for a given square.

One variant of the above is to reduce the size of each square, for example so that each 6x6 kilometre square is divided into 36 sub-squares, in which unique road status information is prepared for each individual sub-square. A problem is also associated with this procedure, however, because smaller squares are used by a smaller number of vehicles per unit of time than a single larger square. The weather data for each sub-square is accordingly statistically less reliable, for example because a particular sub-square may only be used by two vehicles during a period of half an hour.

It is desirable, therefore, to have available an improved system for the collection and processing of weather data, in which the above disadvantages have been overcome, that is to say in which account is taken of local weather conditions at the same as a statistical database is compiled.

### DISCLOSURE OF INVENTION

One object of the present invention is to make available an improved system for the collection and processing of weather data, in which account is taken of local weather conditions, at the same time as a statistical database is maintained.

This object is achieved by a method according to what is described by way of introduction. The method is also characterized in that it includes the following step: the configuration of each sub-area so that at least one distinctive geographical feature or characteristic which affects the climate within the sub-area is for the most part present within the sub-area.

Preferred embodiments can be appreciated from the dependent patent claims.

A number of advantages are achieved with the help of the present invention.

For example, account is taken of local weather conditions when road status information is being compiled, at the same time as a statistical database is maintained.

### BRIEF DESCRIPTION OF DRAWINGS

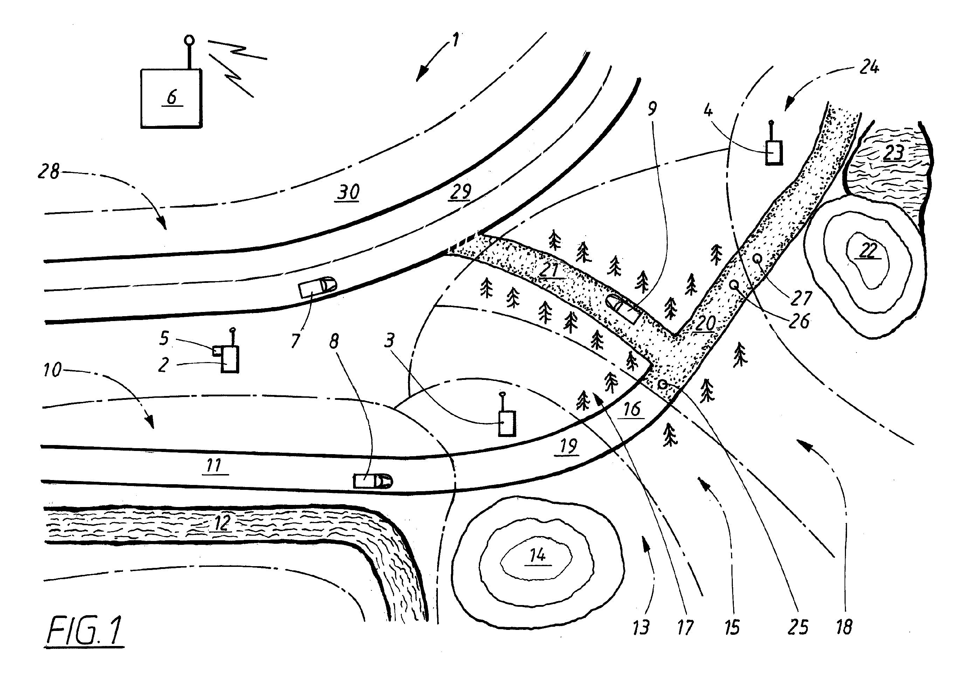

The present invention is now described in more detail with reference to the accompanying figure, Figure 1, which depicts an overview of an area of terrain having a road network.

### MODES FOR CARRYING OUT THE INVENTION

Figure 1 depicts an overview of an area of terrain 1 having a road network, where larger and smaller roads run through the area of terrain. Present in the area of terrain 1 are a first permanent weather station 2, a second permanent weather station 3 and a third permanent weather station 4, which permanent weather stations 2, 3, 4 are so arranged as to collect information relating to general meteorological data such as temperature, atmospheric pressure, atmospheric humidity, wind force, precipitation, etc. One permanent weather station 2 can be equipped with a camera 5 to collect visual data. The weather stations 2, 3, 4 are wirelessly connected to a common control centre 6, where all the data are collected and processed. The connection can be established with the help of a mobile telephone network or by some other previously disclosed means.

Present on the roads are a first vehicle 7, a second vehicle 8 and a third vehicle 9, which vehicles 7, 8, 9 are being driven along the roads. The vehicles 7, 8, 9 are so arranged here as to collect information relating to certain meteorological data such as temperature, atmospheric pressure and atmospheric humidity. Each vehicle is also so arranged as to detect whether its windscreen wipers are operating and, this being the case, at what speed, and how the vehicle is braking and whether its ABS system is activated. The vehicles 7, 8, 9 are wirelessly connected to the common control centre 6, where all the data are collected and processed. The vehicles 7, 8, 9 are also wirelessly connected to one another, so that they can exchange data with one another. These connections can be established with the help of a mobile telephone network or by some other previously disclosed means.

According to the present invention, the area of terrain is divided into a number of sub-areas, each sub-area being delimited in such a way that certain distinctive geographical features or characteristics which affect the climate within the sub-area are generally present within the sub-area. At least one such distinctive geographical feature or characteristic must be generally present within the sub-area. Different road surfaces such as asphalt, concrete or gravel constitute such a characteristic. In other words, one sub-area can follow a watercourse, and another sub-area can follow the foot of a mountain or the edge of a wood.

According to Figure 1, a first sub-area 10 is present along a first section of road 11, where a watercourse 12 runs alongside the section of road 11. At the point at which the watercourse 12 deviates from running along the section of road 11, a boundary with a second sub-area 13 is present, the extent of which runs along and around a first elevated area 14. The second sub-area borders on a third sub-area 15, which runs along a second section of road 16 where the edge of a wood 17 runs along the section of road 16. The third sub-area 15 borders on a fourth sub-area 18, where the road surface of the second section of road 16 changes from asphalt 19 to gravel 20. The fourth sub-area 18 also contains a third section of road 21, which is itself surfaced with gravel 20 and runs along the edge of the wood 17. The fourth sub-area 18 extends further along the second section of road until the edge of the wood 17 ceases and continues up onto a second elevated area 22 near a lake 23, where a fifth sub-area 24 begins.

According to the invention, a position at either end of the fourth sub-area 18, that is to say a first position 25 close to the boundary with the third sub-area 15 and a second position 26 close to the boundary with the fifth sub-area 24, thus have more in common as far as the climate is concerned than a third position 27 in the fifth sub-area, and the fixed distance between the second position 26 and the third position 27 can also be very much smaller than the distance between the first position 25 and the second position 26.

The third section of road 21 continues into a sixth sub-area 28, where it leaves the edge of the wood and forms a turnoff from a fourth section of road 29 that is constituted by a motorway running through an area of arable terrain 30.

The various sub-areas 10, 13, 15, 18, 24, 28 are imaginary sub-areas, within which a particular type of climate is considered to exist, so that the data that are collected by the common control centre are prepared in such a way that a particular climate or weather condition with its associated road conditions, that is to say combined road status information, is prepared for each sub-area. It is possible in this way to provide information indicating, for example, that black ice has formed in the first sub-area 10 as a result of mist from the watercourse 12 having condensed on the part of the first section of road 11 that is present in the first sub-area 10 and having frozen solid there, whereas there is no black ice on the part of the first section of road 11 that is present in the second sub-area 13.

It is also possible for heavy precipitation to give rise to a warning of the risk of aquaplaning in those sub-areas where the sections of road are surfaced with asphalt, whereas this might not be necessary for those sub-areas where the sections of road are surfaced with gravel.

The above are only a small number of examples of how differentiated road status information can be prepared for each sub-area.

Depending on the time of year, the time of day and the weather, it may be necessary to alter the extent of the sub-areas, and the boundary between them can be varied dynamically on the basis of the above-mentioned factors. During the winter, for example, when the temperature falls to a certain number of degrees below zero, the watercourse 12 and the lake 23 can be assumed to be frozen, as a result of which their influence is reduced. It is also possible for an object to cast a shadow onto a carriageway during one part of the day, but not during another part of the day. The sub-areas according to the present invention are thus preferably dynamic and can be adjusted as required, either automatically or manually. Certain adjustments can thus be carried out during the day, while others are associated more with times of year.

The invention is not restricted to the embodiments described above, which must only be regarded as examples of how the invention can be realized, but can vary without restriction within the scope of the following patent claims.

For example, the proportion of vehicles containing equipment for the reading and communication of weather data as described above can vary, since a fleet of vehicles distributed over a given area obviously includes different year models with different levels of equipment. In an area in which the invention is utilized to its full extent at a particular time, the proportion of vehicles containing equipment for the reading and communication of weather data as described above is 100%, whereas it can be 0% in another area at a particular time. The optimal function of the invention is, of course, proportional to the number of vehicles containing equipment for the reading and communication of weather data as described above.

The level of equipment of each vehicle that is arranged according to the present invention can also vary, for example the quantity of meteorological and functional data that is detected and communicated can vary, and certain vehicles can also establish the wireless connection only to and from the common control centre or other vehicles.

More than one common control centre can exist, depending on the method of communication and the nature of the terrain. For example, a plurality of smaller, partially common control centres can relay information to one larger, common control centre, in which case the smaller, partially common control centres thus possess a repeater function.

Additional examples of collected data can relate to the nature of the road surface, such as the status of the coating and its structure, and the condition of the road body itself, for example whether frozen ground is present, and the lead-bearing capacity and drainage conditions.

Further examples of collected data can relate to the air quality, wind conditions, visibility, driver behaviour and road geometry.

As far as the distinctive geographical features or characteristics are concerned, these generally comprise factors of a kind which give rise to variation in the local climate, slippery conditions or other influences on the traffic or road users. Examples of such distinctive features or characteristics are the proximity to a watercourse 12, 23, the proximity to a lake or sea, the proximity to an elevated area 14, 22 or a hollow, undulating terrain, a bridge, local topography, shadow-generating objects, an urban area, vegetation 17 and the configuration of the road 20. Vegetation as an influencing distinctive feature can be determined by the proximity to the edge of a wood 17, for example. The configuration of the road includes the route of the road, for example whether the road is winding, and the surfacing material.

The expressions distinctive geographical feature and geographical characteristic include geographical attributes of all kinds.

The depicted sub-areas 10, 13, 15, 18, 24, 28 in this case are continuous, although this is not essential. One sub-area can be non-continuous, and one and the same sub-area can occur, for example, to either side of a tunnel.

The intention of causing one and the same sub-area to be subdivided into two non-continuous parts is that the collection of statistics for the collected data is improved in this way.

## Claims

1. Method for processing collected data from at least one mobile unit (7, 8, 9) and/or stationary unit (2, 3, 4) in an area having at least one road (11, 16, 21, 29) extending therein, the purpose of the collected data being to extract road status information for the aforementioned road (11, 16, 21, 29), the method involving the following steps:
subdivision of the area into a number of sub-areas (10, 13, 15, 18, 24, 28); and the assignment of obtained unique road status information to each sub-area (10, 13, 15, 18, 24, 28);
**characterized in that** the method also includes the following step:
configuration of each sub-area (10, 13, 15, 18, 24, 28) so that at least one distinctive geographical feature or characteristic which affects the climate within the sub-area (10, 13, 15, 18, 24, 28) is for the most part present within the sub-area (10, 13, 15, 18, 24, 28).

2. Method according to claim 1, **characterized in that** the aforementioned distinctive geographical feature or characteristic is associated with one or more factors which give rise to variation in the local climate, slippery conditions or other influences on the traffic or road users.

3. Method according to claim 2, **characterized in that** the aforementioned distinctive geographical feature or characteristic comprises at least one of the following: proximity to a watercourse (12, 23), proximity to a lake or sea, proximity to an elevated area (14, 22) or a hollow, undulating terrain, a bridge, local topography, a shadow-generating object, an urban area, vegetation (17) and the configuration of the road (20).

4. Method according to claim 2 or 3, **characterized in that** the aforementioned mobile unit consists of a vehicle (7, 8, 9) that is being driven on the aforementioned road (11, 16, 21, 29) equipped with means for the collection of the aforementioned data.

5. Method according to one of the previous claims, **characterized in that** the collected data include at least one or other of the following:
temperature, atmospheric pressure, atmospheric humidity, wind force, precipitation, use of brakes by the vehicle, use of windscreen wipers by the vehicle, and use of Automatic Brake System, ABS, by the vehicle.

6. Method according to one of the previous claims, **characterized in that** the collected data include at least one or other of the following:
the nature of the road surface, the condition of the road body, air quality, visibility, driver behaviour and road geometry.
